# EUROPEAN PATENT APPLICATION

(11) **EP 4 760 511 A1**
(43) Date of publication of application: **17.06.2026**
(21) Application number: 25223601.3
(22) Date of filing: 15.12.2025
(51) Int. Cl.: G06F 11/34

(54) **UNIFIED EXPLAINABLE REDUCTION AND COMPRESSED STORAGE OF RAW, SAMPLED, AND DISCRETIZED MEASUREMENTS**

(30) Priority: 16.12.2024 US 202463734260 P; 03.12.2025 US 202519407137
(71) Applicant: Dynatrace LLC, Boston, Massachusetts 02210 (US)
(72) Inventor: ERTL, Otmar, Linz (AT); SCHWARZBAUER, Günter, Linz (AT); MOSER, Herwig, Linz (AT)
(74) Representative: Steffens, Adrian

(57) **Abstract**

A unified storage format is presented for received observation data records of various formats, including individual observations or histograms and pre-sampled records describing multiple observations. The proposed storage format also supports various data reduction technologies, including coarsening of time and observation value resolutions, where the proposed data reduction technologies retain data describing the quantity of observations. In addition, sampling-based data reduction approaches are described, which at least retain the statistical expectancy value for the number of observations. Further, a definition and storage format for histogram buckets is provided with guaranteed relative error behavior over the whole value range of observation data, that only requires the definition of a number of significant bits for the recording and interpretation of histogram data. The proposed histogram storage scheme is applicable to integer and floating-point observation data. (Fig. 1)

## Description

### Field

The present disclosure relates to a unified storage format for observation data, capable to represent various types of received observation events and to support explainable time and value resolution reductions. The disclosure further relates to value adaptive integer and floating-point histogram formats that guarantee relative error bounds over the complete value range.

### Background

Modern application performance and observability systems provide data describing operating conditions and status of monitored application in unprecedented quantities and varieties.

Although the availability of all this data increases the insight into application status and conditions and helps to identify and fix root causes of undesired situation more quickly, the task of efficiently storing all this data, and quickly retrieving it when it is required, poses a considerable challenge for monitoring system vendors.

In addition, the value of observability data generally degrades with its age. Except for security related forensic analyses, current observability data is more relevant than observability data from the last day or week. Consequently, observability systems providers employ various "aging" strategies for observability data which aims to gradually reduce the memory footprint of observability data proportional to its age. Different, data type specific, data reduction mechanisms are applied to implement these aging strategies, leading to various transformations of observation data that are often difficult to explain to users of the observation data.

In general, an individual observation is defined by its type (i.e., CPU load, error count or request count/duration), its origin (i.e., specific process, host computing system, hardware/system component), the time when the observation was performed, and a specific observed value (i.e., concrete CPU load/error count/request count/request duration value). Observation data sources, like agents deployed to monitored environments or monitoring APIs provided by those environments generate observation data in various forms, and the form in which observation data is provided is often not controlled by the vendor of the monitoring system that consumes the monitoring data. Those observation data forms include but are not limited to individual observation records, pre-sampled observation records, representing a sample of multiple individual observation records, or histogram records, describing a distribution of observation data values.

Data reduction mechanisms applied to received observation data include but are not limited to reduction in form of time resolution coarsening (i.e., from second to 10 second), value resolution coarsening (i.e., from byte resolution to megabyte resolution), location/origin coarsening (i.e., from individual process to all processes running on a host computing system), or sampling (i.e., from a specific set of observation data records, select a specific subset and discard the rest).

All these combinations of different types or formats of received observation lead to highly complex and non-comprehensible data reduction processes.

Consequently, there is need in the field for a unified storage data format, which is capable to represent all types/formats of received observation data records, which also supports simple and explainable data reduction approaches, at least for time and value dimension coarsening and for sampling-based methods.

Histograms are a favored representation form for observation data, because they represent a distribution of sets of observations and therefore provide better insights into the overall state of an observed system than individual observations. Basically, histograms subdivide the value range of a specific observation type into a set of non-overlapping buckets, each bucket representing a portion of the value range, and then record, for each of those value range portions, the number of observations that fall into a specific value range portion. Definition of those value range portions, or buckets of a histogram is crucial for the error behavior, recording and interpretation performance and storage requirements of histograms. Known histogram bucket definition approaches fulfill only a subset of those requirements but not all of them. In addition, such histogram bucket definition should be compatible with the unified storage format described above. Consequently, there is also need in the field for a compact definition and format of histogram buckets, which provides a defined quantification error (preferably a constant relative quantification error over the whole value range), fast and efficient calculation of a bucket index for a received observation value, and of the bucket boundaries for a received bucket index, and a small storage footprint using a storage format which is compatible with an unified storage format for observation data.

This section provides background information related to the present disclosure which is not necessarily prior art.

### Summary

According to an aspect, a computer-implemented method for storing performance monitoring data in a distributed computing environment comprises:
- defining a storage segment for storing observation data, each storage segment includes a time discretization specification, a value discretization specification, and one or more data records, where the time discretization specification specifies size of a time interval, the value discretization specification specifies size a value range, and each data record includes a time index value specifying a particular time interval in which a given observation was made and a value index value specifying a particular range in which value for the given observation lies;
- storing the storage segment in a non-transitory data store;
- capturing, by an agent, observation data, where the agent is instrumented in an application and the performance metric pertains to execution of the application;
- receiving, by a computer processor, the observation data in form of one or more observation records, where each observation record includes a time at which an observation was made and a value for a performance metric;
- retrieving, by the computer processor, the time discretization specification and value discretization specification from the storage segment in the data store;
- for each observation record in the observation data, mapping, by the computer processor, the time at which an observation was made to a time index value using the time discretization specification;
- for each observation record in the observation data, mapping, by the computer processor, the value for a performance metric to a value index value using a mapping function and the value discretization specification;
- for each observation record in the observation data, updating, by the computer processor, a data record in the storage segment using the corresponding time index value and the corresponding value index value.

According to another aspect, a non-transitory computer-readable medium has computer-executable instructions that, upon execution of the instructions by a processor of a computer, cause the computer to
- define a storage segment for storing observation data, each storage segment includes a time discretization specification, a value discretization specification, and one or more data records, where the time discretization specification specifies size of a time interval, the value discretization specification specifies size a value range, and each data record includes a time index value specifying a particular time interval in which a given observation was made and a value index value specifying a particular range in which value for the given observation lies;
- store the storage segment in a non-transitory data store;
- receive observation data in form of one or more observation records, where each observation record includes a time at which an observation was made and a value for a performance metric;
- retrieve the time discretization specification and value discretization specification from the storage segment in the data store;
- for each observation record in the observation data, map the time at which an observation was made to a time index value using the time discretization specification;
- for each observation record in the observation data, map the value for a performance metric to a value index value using a mapping function and the value discretization specification; and
- for each observation record in the observation data, update a data record in the storage segment using the corresponding time index value and the corresponding value index value.

The method may further comprise storing a plurality of storage segments in the non-transitory data store and, for each observation record in the observation data, retrieving a particular storage segment from the plurality of storage segments based on the time at which an observation was made, where the time discretization specification for each of the storage segments further specifies a start time and a time duration for the storage segment.

Each storage segments may further include one or more data segments, where each of the one or more data segments store data for a different performance metric.

The method may further comprise, for each observation record in the observation data, determining a data type for the performance metric contained therein and selecting a particular data segment from the one or more data segments based on the data type for a given observation record.

Updating a data record in the storage segment may further comprise determining whether a data record having the corresponding time index value and the corresponding value index value exists in the storage segment; modifying the data record in response to a determination that the data record exists; and creating the data record in response to a determination that the data record does not exist in the storage segment.

Each data record may further include a multiplicity field specifying the number of observations and updating a data record in the storage segment includes incrementing value of the multiplicity field.

The method may further comprise increasing size of the time interval specified in the time discretization specification and performing data reduction operation on the one or more data records stored in the data store in accordance with the increased size of the time interval.

Performing the data reduction operation may include updating the time index values for each of the one or more data records according to the increases size of the time interval and merging data records having same time index values and same value index values together.

Each data record may further include a multiplicity field specifying the number of observations and merging data records having same time index value and same value index values includes summing values multiplicity fields of merged data records.

The method may further comprise increasing size of the value range specified in the value discretization specification and performing data reduction operation on the one or more data records stored in the data store in accordance with the increased size of the value range.

Performing the data reduction operation may include updating value index values for each of the one or more data records according to the increased size of the value range and merging data records having same time index values and same value index values together.

The method may further comprise performing a data reduction operation by sorting the one or more data records by the index value to form a list of data records, selecting every x record from the list of data records to form a reduced set of data records, and updating values of multiplicity field in each data record in the reduced set of data records according the x.

The method may further comprise performing a data reduction operation by sorting the one or more data records by the index value to form a list of data records, sampling data records in the list of data records to form a reduced set of data records according to a sampling rate, and updating values of multiplicity fields in each data record in the reduced set of data records according the sampling rate.

The value discretization specification may be defined as a histogram. Preferably, each histogram record in the histogram includes a significant bit count and one or more bucket entries, where the significant bit count specifies number of significant bits being stored, and each bucket entry stores a sequence of significant bits and number of discarded bits.

The disclosed technologies are directed to a unified storage format for various types of received monitoring data records. The proposed format also supports seamless and explainable data reduction techniques, including the resolution coarsening of time and value dimension data, and various data point sampling approaches.

The proposed unified storage format may contain but is not limited to a discretized time value, specifying a time or time range in which observations were made, a discretized value, specifying a value range covered by the record, and a multiplicity, defining the number of observations performed during the time period covered by the discretized time value that have a value that falls into the value range covered by the discretized value of the observation record.

Data reduction processes may coarsen time, value resolution, or both, leading to multiple unified observation records having the same discretized time and observation value. Those multiple records may be replaced by one observation record with those discretized time and observation value with a multiplicity equal to the sum of the multiplicities of the replaced observation records. This leads to a data reduction which introduces a controlled increase of quantification errors, while keeping information about all recorded data points (due to the summed-up multiplicities).

Variant embodiments of the disclosed technologies may include conversion methods of monitoring data records of different formats and semantics into one or more unified observation records representing the received monitoring data records. Exemplary conversion methods include the conversion of individual observation records into corresponding unified observation records, conversion of histogram observation data into multiple unified observation records, e.g. by creating one unified observation record for each bucket of the received histogram, or conversion of pre-sampled observation records, by creating individual unified observation records with a multiplicity value set to a multiplicity value received with the pre-sampled observation record.

The proposed observation data storage technologies may also consider the integration of new unified observation records with already stored ones. Thereby, some variant embodiments may immediately integrate new received unified observation records with already stored ones, and other variant embodiments may first temporarily store new received unified storage records in a separate buffer and then cyclically integrate the new buffered unified observation records with already stored ones in a batch-processing fashion.

Different variant embodiments of the disclosed technology may use various sampling-based data reduction approaches. One of those sampling approaches may be limited to sampling rates of the form of 1/n, where n is an integer number greater than 2. Those approaches may first sort the set of to be sampled unified observation records according to their observation value (either descending or ascending) and then select every nth observation record. If the multiplicities of the to be sampled unified observation records are inhomogeneous, they may be transformed into a set of equivalent observation records with homogeneous multiplicities (i.e., by replacing one observation record with multiplicity n by n observation records with multiplicity 1, those n observation records having the same time and value data) before the sampling process, and then compacting the remaining observation records after the sampling process (i.e., by replacing n observation records having the same time and value data by one observation record having the same time and value data as the replaced observation records and having a multiplicity equal to the sum of multiplicities of replaced observation records).

Another sampling approach may first calculate an individual sampling probability for each of the received unified observation records, where the sampling probability depends on a sampling goal and the multiplicity of the unified observation record, and then apply a known sampling strategy to select the subset of unified observation records that is retained. The multiplicities of the retained records may then be updated by multiplying them with the reciprocal value of the sampling probability of those records. If this yields non-integer multiplicity values, and integer multiplicity values are required, a randomized rounding approach may be applied to create corresponding integer multiplicity values.

Yet other embodiments of the disclosed technology may be directed to the efficient creation, storage and evaluation of integer and floating-point histogram data records, where the relative quantification error arising from mapping individual observation values to histogram buckets is independent from the magnitude of the observation values. Those embodiments may specify a number of significant bits to define histogram buckets. If a received observation value requires less than the number of significant bits, the receive observation value is also used as histogram bucket. Otherwise, the least significant bits of the received observation value are stripped, until only the number of significant bits remains. The extracted significant bit sequence, together with information about the number of stripped bits are used to define and identify a histogram bucket. The histogram bucket data may be stored in one integer value of desired length, or in the mantissa of one floating point value. Only simple and high performant bit-shifting and bit-masking operations are required to determine the histogram bucket of a received value, or to calculate upper and lower bound values for a specific histogram bucket. The proposed histogram bucket storage format also supports post-recording bucket resolution coarsening, e.g., by stripping a bit from the significant bit sequence, updating data for the number of stripped bits, and merging histogram buckets having the same bucket index after the coarsening operation by summing their bucket counts.

The proposed histogram bucket storage format may also be used for the observation value discretization of unified observation records.

Further areas of applicability will become apparent from the description provided herein. The description and specific examples in this summary are intended for purposes of illustration only and are not intended to limit the scope of the present disclosure.

### Drawings

The drawings described herein are for illustrative purposes only of selected embodiments and not all possible implementations, and are not intended to limit the scope of the present disclosure.
- FIG. 1: provides a block diagram of an exemplary monitoring system that uses the proposed unified storage format for the storage of storage of received monitoring data, and that applies data reduction techniques on stored monitoring data.
- FIG. 2: shows the structure and layout of data storage segments containing time series data, using the proposed unified storage format.
- FIG. 3: contains exemplary formats of ingested monitoring data.
- FIGs 4A and 4B: describe the process of unifying and storing received monitoring data records, where FIG. 4A shows the unification process of received monitoring data records of different formats and FIG. 4B illustrates storage strategy variants for created unified observation data records.
- FIG. 5: conceptually describes resolution coarsening processes for observation data records, covering the resolution coarsening of time and observation value data.
- FIGs 6A and 6B: show flow charts of different down sampling approaches for monitoring data stored in form of unified observation records.
- FIG. 7: conceptually depicts a value adaptive histogram record, capable of storing histogram buckets which are defined by a significant bit sequence and a discarded bit count.
- FIG. 8: provides a flow chart describing the recording process of integer observation values into integer histogram records and a description of the storage layout of integer histogram bucket index values on bit level.
- FIG. 9: provides detailed flow charts of processes to record observation values into histogram records and to calculate upper and lower bounds for histogram buckets.
- FIG. 10: shows a flow chart describing the recording of floating-point values into floating-point histogram records, and the storage layout of floating-point histogram bucket index values.
- FIG. 11: shows flow charts of processes to record and interpret floating-point histogram records.
- FIG. 12: provides flow charts of processes performing bucket granularity coarsening for already recorded integer and floating-point histogram records.

Corresponding reference numerals indicate corresponding parts throughout the several views of the drawings.

### Detailed description

Example embodiments will now be described more fully with reference to the accompanying drawings.

The proposed storage format is directed to enable a space efficient storage of large amounts of observation data records in a storage efficient and unified way. Storage efficiency is achieved by not storing actual observation value and time data, but quantification index data that identify time and value quantification ranges, and by combining data describing time of an observation and the actual observation value with an observation multiplicity, which enables to store an arbitrary number of equivalent observations (i.e., observations falling into the same time and value quantification range) in one observation record. Furthermore, the concept of not storing actual time and value data in the storage records, but references to elements of quantification schemes, e.g., in form of quantification index values, enables fast and efficient data reduction or "aging" operations, where multiple, similar observations (both in terms of represented observation time and value), are merged into one observation record to save storage space. For such operations it is sufficient to exchange the discretization scheme (either time, value, or both), update quantification index values for individual observation data records and then merge observation data records having the same time and value discretization index values after the update. The proposed format even supports stream-like data reduction processes, where each input observation data record is only read and analyzed once to create data reduced output observation records. Even in-place data reduction processes are supported, where storage space occupied by input observation data records is incrementally overwritten with aged observation data records during the data aging process.

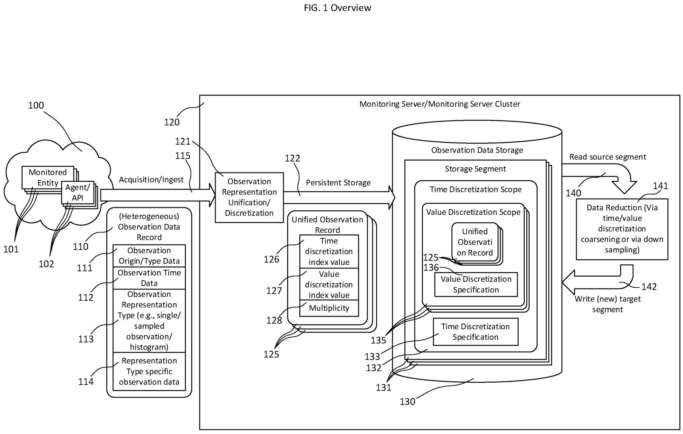

FIG. 1 provides a block diagram of a monitoring system using the proposed storage format to store received monitoring data. A monitoring server 120 receives 115 observation data in form of observation data records of heterogeneous formats 110. The observation data records 110 may be acquired by agents or other sources for monitoring data 102, like monitoring APIs from monitored entities 101, like processes, services, host computing systems, containers, pods or from execution orchestration management systems (i.e., Kubernetes management planes) or from cloud computing monitoring and management systems, that operate in a monitored environment 100.

The received heterogeneous observation data records 110 may use various formats to represent observation data, however all those formats may contain at least data describing the origin (e.g., in form of a host computing system identified by its network address or other identification data, a process running on an operating system identified by its process number or identifier, its command line or the name of the binary file executed by the process, or a service provided by a process identified by name or other identification data for the service) and type of observed parameter (e.g., CPU load, memory usage, service response time) of contained observation data 111, data about the time or time period when the observation was performed 112, data describing type and format (e.g., single observation, pre-sampled or otherwise condensed observations, or histogram of multiple observations) in which contained observation data 113 is represented, and actual representation type specific observation data 114.

Received heterogeneous observation data records 110 are forwarded to an observation representation unification/discretization unit 121, which creates one or more unified observation records 125 for each received heterogeneous observation data record 110.

An unified observation record 125 may contain but is not limited to a time discretization index value 126, defining a point in time or a time period specifying when the represented observation or observations were made, a value discretization index value 127, specifying a value range in which the value of the represented observation/observations lie, and a multiplicity field 128, specifying the number of observations represented by the unified observation record.

The generated unified observation records may be persistently stored 122 in an observation data storage 130.

The exemplary observation data storage shown organizes stored observation data in form of storage segments 131, where each storage segment contains a time discretization scope 132. A time discretization scope 132 may contain a time discretization specification 133, which defines the granularity in which the timing of observations is represented. Exemplary time discretization specifications may specify time periods of 1, 5, 30 minutes, 1, 2, 12 hours or one day.

A time discretization scope 133 may contain one or more value discretization scopes 135, where each value discretization scope contains a value discretization specification 136, specifying the granularity in which observation data values are stored. Exemplary value discretization specifications may specify that only integer values are stored, or they may specify a set of value ranges, where each received observation data value is mapped to one of those value ranges. An exemplary, very fine-grained value discretization specification may store received floating-point observation data values as they arrive. Exemplary coarse-grained value discretization specifications may define consecutive, non-overlapping value ranges covering the whole value range of an observation data type, where each of those value ranges covers 1, 2, 5 or 10 percent of this value range. Other discretization examples may include, for floating point values, truncation or rounding of received floating point values to integer values, unit based discretization coarsening, where for example, memory usage related observation values are received in byte granularity, those byte values may be converted into memory units with coarser granularity, like megabytes or gigabytes, and only an integer value representing megabyte or gigabyte values is stored.

More specifically, a discretization specification for memory usage related observation data could specify a mapping function defining that memory usage data is received in form of byte values and those byte values are converted into integer megabyte values. This mapping function would first divide receiving byte values by the value 2²⁰ (1,048,576) and then truncate the result of this division to an integer value. This integer value then also represents the value discretization index value for a received memory usage observation value in bytes. This way, all received byte values from 1 to 2²⁰ would be mapped to the value discretization index value 0, representing all received byte values from 0 to 1,048,576. Byte values from 1,048,577 to 2,097,152 would be mapped to the value discretization index 1, representing all received byte values from 1,048,577 to 2,097,152 and so on.

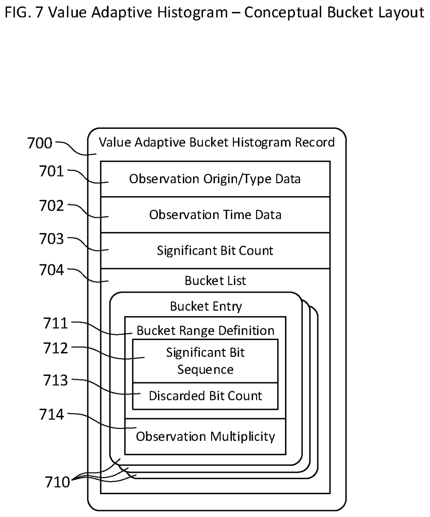

In addition, discretization schemes that provide a constant relative discretization error over the covered value range may be applied. An example of such a discretization scheme is the value adaptive histogram bucket definition described in FIGs. 7 to 12. Here, the basic idea is to determine the most significant set bit of a received value, and to keep a fixed number of most significant bits, starting with the most significant set bit, as significant bit sequence, and discard all bits having a lower significancy than the bits in the significant bit sequence. With this approach, the number of discarded bits, which also defines the discretization granularity, increases with increasing received values. An increased discretization granularity also increases the absolute discretization error, as the value range into which an observation value gets mapped increases, but as this increase of the absolute discretization error is nearly proportional to the discretized value, the relative error (absolute discretization error divided by the discretized value) remains stable over the whole value range. All discretization schemes define one mapping function which maps an incoming, to be discretized value to a discretization index, and a second mapping function which maps a discretization index to an upper bound and a lower bound of the value range of the discretization interval represented by the discretization index.

Unified observation records 125 may be stored within a value discretization scope 135. The time discretization index value 126 of those unified observation records may be interpreted according to the time discretization specification 133 of the enclosing time discretization scope, and the value discretization index value 127 of those unified observation records may be interpreted according to the value discretization specification of the value discretization scope 135 in which they are stored. It should be noted that the nesting configuration of time discretization scope 133 and value discretization scope 135 as shown in FIG. 1 is only exemplary. Various other configurations are possible, including time discretization scopes that are nested within a value discretization scope, or a combined value and time discretization scope.

A data reduction unit 141 may read 140 one or more source storage segments, apply various data reduction methods on the read storage segments, including but not limited to applying coarsening of time and/or value resolution on unified observation records stored in those segments, or applying various data point sampling methods on those unified observation records. The result of the applied data reduction methods are storage segments that cover the same observation scope (i.e., time frame and/or portion of the monitored environment 100), that require less storage space and that also contain less information about the performed observations due to controlled time and/or value resolution coarsening or due to sampling-based data reduction. Goal is to maximize the gain in reduced storage space requirements while minimizing the data loss. The data reduction process may use a specific amount of storage segments as input and may create a lower amount, or even only one output segment. In some variants, the input data segments may be deleted after corresponding output data segments are created. A typical application of the data reduction process is the controlled "aging" of observation data.

More recent observation data, like data from the last hour or day is more relevant for the evaluation of the current state of a monitored environment, whereas data form a week or older is not as relevant, however such older data may still be valuable to identify trends or to define baselines. Therefore, it is desired and also adequate to gradually reduce storage space and also information accuracy of observation data with its age.

The proposed unified observation records are advantageous in environments that apply repeatedly data reduction methods on monitoring data with increasing age of the monitoring data, because the data format is not changed between aging steps, and the information loss caused by the applied data reduction method remains controllable and explainable to customers of the monitoring system.

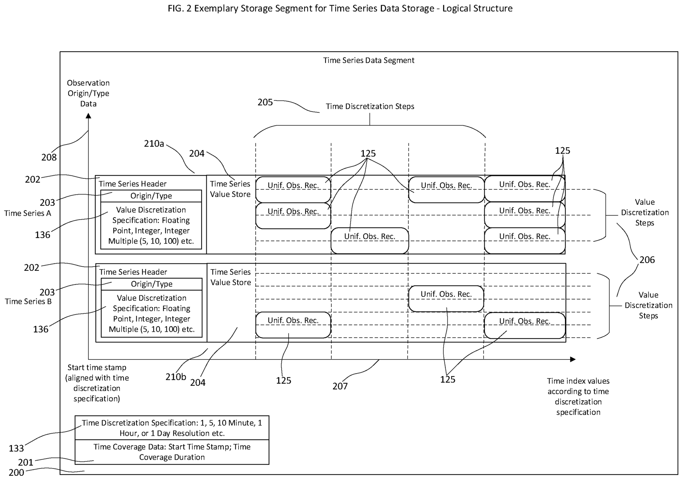

Referring now to FIG. 2 which explains the storage structure of a data segment in more detail by example of a data segment dedicated to the storage of time series data.

A time series data segment 200, may contain time period coverage data 201, e.g., in form of a start time and an end time or a start time and a coverage duration. It may further contain a time discretization specification 133, as already described in FIG. 1.

Conceptually, the time series data segment may contain multiple time series, like time series A 210a and time series B 210b, where each of those time series fragments covers the time period specified by the time period coverage data 201 of the data segment 200. It should be noted that time series data for individual time series may cover a duration that extends the time period covered by a single data segment 200. In this case, the time series may be distributed over multiple data segments.

A time series 210 may contain a time series header section 202, storing data requiring for interpreting the observation values stored for the time series, like type and origin data 203 for the stored observation values, and a value discretization specification (as already described in FIG. 1), which is required to interpret the value discretization index value 127 for unified observation records stored for the time series and to map those index values to actual observation values or value ranges. Next, a time series may contain a time series value store 204, which contains one or more unified observation records 125, where the time discretization index value 126 of such a record 125 specifies its discretized position in the time range 205 covered by the data segment, and its value discretization index 127 specifies the observation value range it represents according to the value discretization specification of the time series 210 to which the record 125 belongs.

The time discretization specification 201 of a time series data segment 200 defines various discretization steps 205, which are, for this exemplary time series data storage format applicable to all time series (i.e., 210a and 210b) stored in the segment. Each time series header 202 may contain a separate value discretization specification 136, which is only applicable to the unified observation records contained in the time series value store 204 of this time series.

A time discretization specification 133 and a time discretization index value 126 specify a time period covered by a unified observation record, and value discretization specification 136 together with the value discretization index value 127 of the unified observation record specify a value range covered by the unified observation record, and the multiplicity of the unified observation record specify the number of observations that were performed during the covered time period and that had a value that was in the value range covered by the unified observation record.

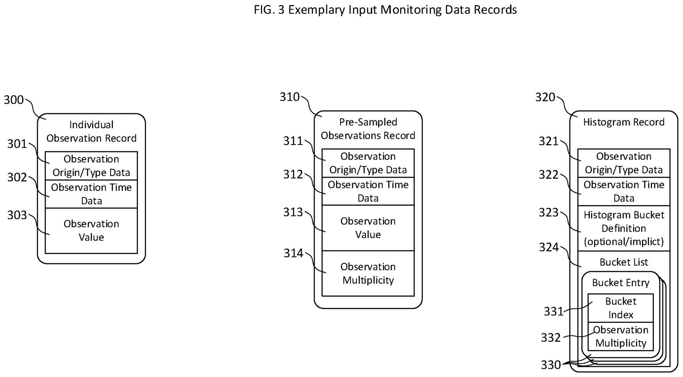

Coming now to FIG. 3, which provides three exemplary types of observation data records that may be ingested by the monitoring system and then transformed into one or more unified observation records that are equivalent to the ingested observation data records.

An individual observation record 300, which may be used to describe and transfer an individual observation, is characterized by the type the of performed observation and the location or origin where the observation occurred 301, a time when the observation was performed 302 and a value or other quantity for the observation 303.

A pre-sampled observation record 310 describes an observation that was selected from a set of multiple observations, typically of the same type and from the same origin. Therefore, a pre-sampled observation record 310 may also contain an observation multiplicity field 314, because it represents multiple observations. Such a pre-sampled observation record may contain but is not limited to an origin and type field 311, specifying the type of the performed observation and its origin, an observation time field 312 specifying the point in time, or time period in which the represented observations were performed, and a multiplicity field 314, specifying the number of represented observations.

A histogram record 320 may be used to store and transfer histogram data describing multiple performed observations, typically from the same type and origin, which were observed during a specific period of time.

A histogram record 320 may contain but is not limited to origin/type data 321, and observation time data 322, histogram bucket definition data 323 and a bucket list section 324, containing multiple bucket entries 324.

A bucket entry 330 may be used to describe a histogram bucket and may contain but is not limited to a bucket index 331, identifying a histogram bucket according to the histogram bucket definition 323, and an observation multiplicity value 332, specifying the number of observations that fall into the value range defined by the histogram bucket that is identified by the bucket index 331 of the bucket entry.

The histogram bucket definition 323 may either be incorporated into the histogram record in form of a list bucket value ranges, or a formal mathematical definition, or it may be included via a reference, which identifies a histogram bucket definition on which sender and receiver of the histogram record agreed on. In case there is only one histogram bucket definition known by sender and receiver, the histogram bucket definition field 323 may be omitted.

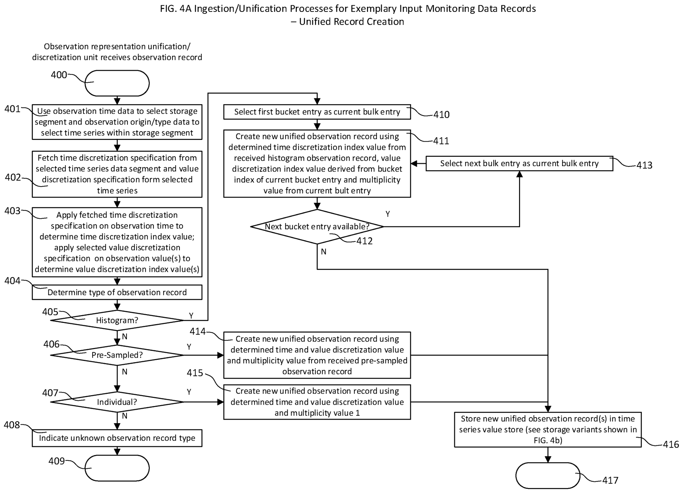

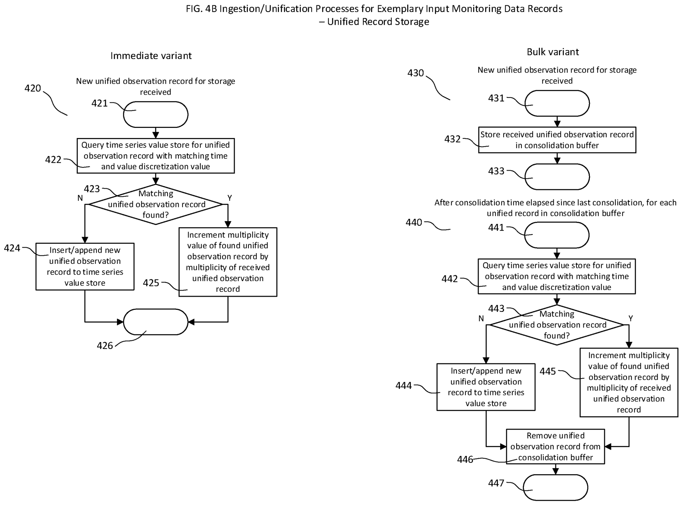

Referring now to FIGs. 4A and 4B, which provide a flow chart of an exemplary process to ingest the observation record types described in FIG 3, and to translate them into unified observation records 125. FIG. 4A is directed at the translation of those records and FIG. 4B to variants for integration of newly created unified observation records with already stored ones.

The ingest of a new observation record (i.e., one of an individual observation record 300, a pre-sampled observation record 310 or histogram record 320) starts with step 400, when the new observation record is received by an observation representation unification/discretization unit 121.

Following step 401 may use observation timing data (field 302 for individual observations records, field 312 for pre-sampled observation records or field 322 for histogram records) to select a storage segment 131 and observation origin/type data (field 301 for individual observations records, field 311 for pre-sampled observation records or field 321 for histogram records) to select a time series 210 within the selected storage segment. It should be noted that various types of assignments of observation data to storage segments may be applied, some of those assignment types may use complete or parts of observation origin data or observation type to identify an appropriate storage segment. Accordingly, also step 401 may be adapted and may also consider portions of full observation origin data and/or observation type data for storage segment selection. The only requirement for storage segment definition and for the execution of step 401 is that selection of the storage segment and time series is unambiguous, and that this selection also unambiguously identifies a time discretization specification and a value discretization specification. Typically, storage data segments subdivide observation data according to an observation time dimension, where each storage data segment 200 represents a time period defined by the time coverage data 201 of the storage data segment. The observation time of received observation data records may be compared with the time period covered by storage data segments to filter storage data segments covering a time period into which the observation time falls. In addition, storage data segments may subdivide observation data on an origin dimension, and observation data may be assigned to storage data segments according to origin data or portions of origin data of received observation records. As an example, origin data may contain tenant identification data, e.g., identifying a specific customer or user of the monitoring system, application identification data describing applications operated by the tenant, and data identifying individual host computing systems and processes running on those processes. Tenant identification data and application data may be used to select storage data segments and data identifying host computing systems and processes may be used to select time series within the selected storage data segment.

Following step 402 may then fetch time discretization specification and a value discretization specification from storage segment and time series identified in step 401, and step 403 may then apply the fetched time discretization specification on received observation time data (on data stored in field 302 for individual observations records, field 312 for pre-sampled observation records or field 322 for histogram records) to determine a time discretization index value, and apply the fetched value discretization specification on received observation value data (on data stored in field 303 for individual observations records, field 314 for pre-sampled observation records, or field 331 for all bucket entries in received histogram records).

Determining a value discretization index value for an individual observation value, may for already pre-discretized values include determining an upper bound and a lower bound for the discretization interval into which the received observation value falls, calculating a representative value for the discretization interval, e.g., by adding upper bound and lower bound and dividing the result by two, and then applying the value discretization specification on the calculated representative value to determine a value discretization index value.

Following step 404 may then determine the representation type of the received observation record (i.e., individual observation record 300, pre-sampled observation record 310, or histogram record 320). Step 404 may use a representation type indicator (not shown) stored in all variants of supported observation record types to determine the representation type of the received observation record.

Following decision steps 405 to 407 may then select a processing path according to the identified representation type.

In case the representation type is histogram, decisions step 405 may continue the process with step 410, which selects the first bucket entry 330 contained in the bucket list 324 of the received histogram record as current bucket entry, and following step 411 may create a new unified observation record 125 for the selected current bucket entry. Step 411 may use the time discretization index value calculated for the observation time date 322 of the received histogram record and the value discretization index value calculated for the bucket index 331 of the currently selected bucket entry to set time discretization index value 126 and value discretization index value 127 of the created unified observation record. Further, step 411 may use the observation multiplicity value 332 to set the multiplicity value 128 of the created unified observation record. Following decision step 412 may determine if a next bucket entry 330 is available, and in this case continue with step 413 if a next bucket is available. Step 413 may select this next bucket entry as current bucket entry and then continue with step 411. If otherwise no next bucket entry is available, the process continues with step 416, which stores the newly created unified observation records in the time series value store 204 of the selected time series. The process then ends with step 417.

It should be noted that the value discretization for histogram records may sometimes be coarser than the value discretization that was applied for the creation of the histogram. In this case, multiple bucket entries with adjacent bucket index values may be used to create one unified observation record. In this case, a representative value for the multiple bucket entries may be calculated, e.g., by adding the lowest upper bound value to the highest upper bound value of the used bucket entries and dividing the result by 2. The so calculated representative value may then be used to determine a value discretization index value according to the value discretization configuration, which may then be used as value discretization index value 127 for the unified observation record that is created for the multiple bucket entries. The multiplicity 128 of this unified observation record may be set to the sum of the observation multiplicity values 332 of the multiple bucket entries.

In case decision step 405 determines that the representation type of the received observation record is not equal to histogram record, decision step 406 is executed which determines whether the representation type equals a pre-sampled observation record. In this case, step 414 is executed, which creates a new unified observation record using the time discretization index value and the value discretization index value determined by step 403 to set time discretization index value 126 and value discretization index value 127 of the created unified observation record. The multiplicity value 128 of the created unified observation record is set to the observation multiplicity value 314 of the received pre-sampled observation record 310. Afterwards, step 416 is executed, which stores the created unified observation record, and the process ends with step 417.

If decision step 406 determines that the received observation record is no pre-sampled observation record 310, decision step 407 is executed, which determines whether the received observation record is an individual observation record 300. In this case, step 415 is executed, which creates a new unified observation record 125, and sets time discretization index value 126 and value discretization index value 127 to the corresponding values determined by step 403 and sets the multiplicity value 128 to 1. Afterwards, the created unified observation record is stored by step 416, and the process ends with step 417.

If otherwise decision step 407 determines that the received observation record is not an individual observation record, the process continues with step 408, which indicates that an observation record with an unknown or unsupported representation type was received, and the process is afterwards terminated with step 409.

Coming now to FIG. 4B, which provides flow charts of two variants to perform the storage of new unified observation records that were created by the process described in FIG. 4A and which should be stored in step 416 of this process.

A storage process variant which immediately integrates newly created unified observation records with already stored one is described in flowchart 420.

This process starts with step 421, with the receipt of a new unified observation record 125, which should be stored. Following step 422 may then query the time series value store 204 to which the unified observation record should be stored for a unified observation record having the same time 126 and value 127 discretization index values as the received unified observation record.

The time series value store 204 into which the received unified observation record is stored may be determined using time series identification data, like origin and type data (i.e., 301 for individual observation records, 311 for pre-sampled ones, or 321 for histogram records) of the received observation for which the unified observation record was created.

If a matching unified observation record was found in the time series value store, decision step 425 continues the process with step 424, which increments the multiplicity value of the found unified observation record by the multiplicity value of the received unified observation record. The process then ends with step 426.

If otherwise no matching unified observation record was found in the time series value store, the process continues with step 424, which inserts or appends the received unified observation record to the time series value store. The process then ends with step 426.

A batch-oriented storage variant, which first stores new received unified observation records in a consolidation buffer, which may reside in main memory of a process performing observation representation unification/discretization tasks, is shown in flow charts 430 and 440.

Flow chart 430 describes the process of storing new received unified observation records 125 in a consolidation buffer (not shown). The process starts with step 431, when a new unified observation record 125 is received, and following step 432 stores the received unified observation record in the consolidation buffer. The process then ends. Storing received unified observation records in the consolidation buffer may also include aggregating/combining unified records originating from the same source, containing observation data of the same type, and having the same time and value discretization index value. As an example, if a new unified observation record is received for storage in the consolidation buffer, the consolidation buffer may first be queried for an existing unified observation record having identical origin and type, and identical time and value discretization index value. If such a unified observation record exists in the consolidation buffer, only the multiplicity of this already record may be incremented by the multiplicity value of the received record. Only if no matching unified observation record is found in the consolidation buffer, the new unified observation record may be stored there.

The batch-oriented permanent storage of unified observation records temporarily stored in a consolidation buffer in their respective time series value stores is described in flow chart 440. The process starts with step 441, when a condition for the execution of the batch process occurs and is executed for each unified observation record that is stored in the consolidation buffer. Such conditions may include but are not limited to a specific time since last execution of the batch process elapsed, the storage space required by the consolidation buffer, or the number of unified observation records stored in the buffer exceeds a threshold, or a combination of those or other conditions.

Following step 442 may query the time series value store in which the currently processed unified observation record should be stored, whether this time series value store already contains a unified observation record with equal time 126 and value 127 discretization index value. If such a unified observation record exists in the time series value store, the multiplicity value 128 of the found record is incremented by the multiplicity value 128 of the currently processed unified observation record by step 445.

If no matching unified observation record is found in the time series value store, decision step 443 executes step 444, which inserts or appends the currently processed unified observation record to the time series value store.

Step 446 is executed after step 444 or 445 and removes the currently processed unified observation record from the consolidation buffer. The process then ends with step 447.

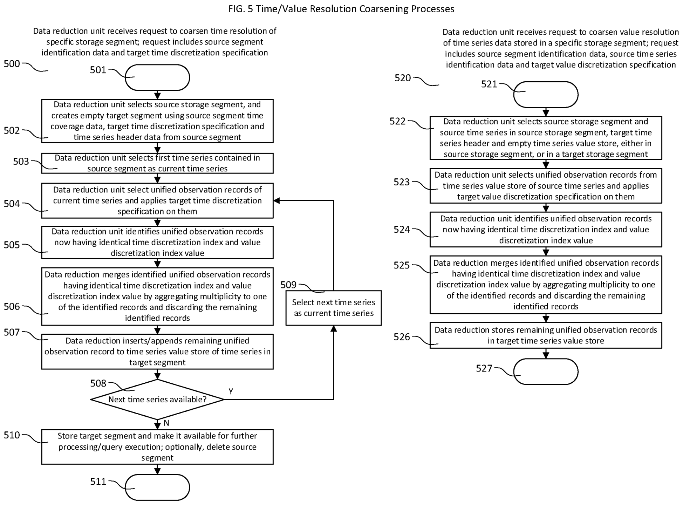

Referring now to FIG. 5, which provides flow charts of processes that perform data/storage size reduction measures on sets of already stored unified observation records using resolution coarsening of the time and/or value discretization. Due to resolution coarsening, two or more unified observation records may fall to the same time and value discretization coordinates. Such unified observation records may then be replaced by one unified observation record having the same time and value discretization coordinates and a multiplicity value equal to the sum of the multiplicity values of the replaced unified observation records. This reduces the number of unified observation records that are stored and in turn also reduces the amount of required storage space.

Data reduction by coarsening the observation time resolution for time series data segment 200 is shown in flow chart 500. The data reduction process may be performed by a data reduction unit 141, which reads a source time series data segment and creates a target time series data segment using a target time discretization specification 133, which defines a time data resolution which is coarser than the time data resolution of the source time series data segment. The target storage segment may be created by overwriting or replacing the source target storage segment, or it may be created as independent storage segment that covers the same time period as the source data segment using a coarser time resolution.

The process starts with step 501, when the data reduction unit receives a request to perform time resolution coarsening for a specific time series storage segment. The request contains identification data for the to be processed storage segment (i.e., a segment identifier, data about the time period covered by and/or data specifying the observation data stored in the storage segments, e.g., in form of a range or set of origin or observation type identifiers), and a target time discretization specification. As an example, the time discretization specification of the source segment may subdivide time in 1-minute steps, whereas the target time discretization specification may specify 5-minute or 1-hour steps.

Following step 502 may use the source storage segment identification data to select the source storage segment and then create an empty target segment using time coverage data 201 and time series headers 202 of the source storage segment, and the received time discretization specification 133.

In following step 503, the data reduction unit 141 may select the first time series 210 contained in the source storage segment as current time series, and subsequent step 504 may select the unified observation records stored in the time series data store 204 of the current time series 210 and then apply the target time discretization specification on them. As an example, the source time discretization specification may define 1-minute intervals, therefore unified observation records following this target time discretization specification may contain a time discretization index value 126 which identifies such a 1-minute interval. The target time discretization specification may define 5-miniute intervals. In this case, step 504 may map each time discretization index value identifying a 1-minute interval according to the source time discretization specification to a 5-minute interval that is defined according to the target time discretization specification into which the respective 1-minute intervals fall. Step 504 may either create copies of selected unified observation records and update the time discretization index values in the copies, or it may update the time discretization index values of the original unified observation records, depending on whether a new data segment containing observation data with reduced time resolution is desired, or the existing data segment with higher time resolution should be overwritten with observation data with reduced time resolution.

Subsequent step 505 may then identify unified observation records that now have identical time discretization 126 and value discretization 127 index values, and following step 506 may then merge the so identified unified sets of observation records by creating for each set of unified observation records with identical time and value coordinates a replacement record having the same time and value coordinates and having a multiplicity value 128 set to the sum of multiplicity values of the unified observation records in the set. Step 506 may either create a new replacement record or update the multiplicity value of a selected record in the set. In both cases, only one unified observation record which has its multiplicity value set to the sum of multiplicity values of all unified observation records in the identified set is retained and all other unified observation records contained in the set are discarded.

Following step 507 may then store the unified observation records created by step 506 in the time series value store 204 of the current time series 210 in the target storage segment if creation of a new data segment is desired. If an in-place overwrite is desired, where data of the source data segment is overwritten with new data using a coarser time discretization, step 507 may be omitted.

Following decision step 508 determines whether the source storage segment contains a next, not yet processed time series and in this case continues with step 509, which sets the next time series as current time series and then continues with step 504.

If otherwise no next time series is available, the process continues with step 510, which stores the newly created target segment in the observation data storage 130, and optionally deletes the source segment if it is no longer required. Step 510 may be omitted if in-place update of the source data segment was performed.

The process then ends with step 511.

Referring now to flow chart 520, which exemplary describes a data reduction process that applies value resolution coarsening on unified data records of an individual time series 210.

The process starts with step 521, when a request to perform value resolution-based data reduction is received by the data reduction unit 141. The request may include identification data for the time series on which the data reduction procedure should be applied. This identification data may contain identification data for the storage segment containing the time series and data to identify the time series within the storage segment. Further, the request may contain a target value discretization resolution.

In following step 522, the data reduction unit may select the storage segment, and the time series contained in the storage segment that are identified in the received request. Afterwards, step 522 may create a target time series 210 with an empty time series value store 204, either in the identified storage segment 200, or in a separate target storage segment. If an in-place data reduction of the identified time series is desired, creation of the target time series may be omitted.

In following step 523, the data reduction unit may select the unified observation records contained in the time series value store of the selected time series and apply the received value discretization specification on them. In case a new, separate target time series is desired, step 523 may create copies of the selected unified observation records and apply the target value discretization specification on them. If otherwise an in-place data reduction is desired, step 523 may apply the target value discretization specification on the original records.

As an example, the time series selected for data reduction may contain observation data recording memory consumption in byte resolution, and the target value discretization specification may specify that memory consumption is represented in megabyte resolution (either MB or 10⁶, or MiB or 2²⁰). In this case, the value discretization index values 127 of the selected unified observation records would identify amounts of memory usage in byte granularity. Step 523 would coarsen this resolution to megabytes and therefore map all byte resolution values falling into the same megabyte value range to the same megabyte value (i.e., 0 - 10⁶ -1 byte may be mapped to 0 megabyte, 10⁶ to 2*10⁶ -1 to 1 megabyte and so on).

Afterwards, step 524 may identify groups unified observation records that have both an identical time value discretization index value and an identical value discretization index value, and subsequent step 525 may then merge each of those groups by creating one representative unified observation record for each group, where time discretization index value 126 and value discretization index value 127 of those representative records are set to the corresponding values of the records in the represented groups, and the multiplicity values 128 of those representative records are set to the sum of multiplicity values of the represented records. If in-place data reduction is desired, step 524 may select one of the records of an identified group, update its multiplicity value to the sum of multiplicity values of all records in the group, and discard the other unified observation records. If otherwise a separate time series with coarser value discretization is required, then step 524 may create a new unified observation record for each identified group and set time and value discretization index value and multiplicity value of this new record as described before.

Following step 526 may be omitted if in-place data reduction is desired. If otherwise a separate time series is desired, step 526 may store the unified observation records that were created by step 524 in the time series storage value of this new, target time series.

The process then ends with step 527.

The flow charts shown in FIG. 5 are directed to show the effect of the data reduction processes based on value and time resolution coarsening. A more efficient, data-streaming oriented aging approach, which reads each unified observation record only once, and in the sequence as they are stored in an input segment is conceptually discussed here. Variants of this approach even support in-place data reduction, where unified observation records created by the aging process are stored at the same location as the unified data records that are used as input for the data aging process and therefore overwriting those input data records.

A prerequisite for such a streaming oriented aging approach is that the storage sequence of the unified observation records is sorted according to time discretization index value and value discretization index value. As those records are typically received and stored in the same, or a similar sequence as they were observed, sorting according to time discretization index value is already given. Therefore, the ingest process only needs to ensure that unified observation records that were created for the same time discretization period (i.e., having the same time discretization index value) are stored in a sorted order according to their value discretization index value (sorting order may either be ascending or descending and needs to be stable during ingest).

If resolution coarsening is applied to such a sorted sequence of unified observation records, then runs of unified observation records having both identical time and value discretization index value are created, and if such a run is ended, e.g., by a record with differing time or value discretization index value, then no further record that matches the ended run exists.

This feature of so sorted sequences of unified observation records can be exploited by a streaming oriented aging process by reading input records, applying the resolution coarsening on the read input record to create an aged record and compare time and value discretization values with those of the previously read and aged record. If either time or value discretization index changed, then a new "run" of "equivalently aging" records is started. In this case, the aging process may create a new aged output record using the new coarsened time and value discretization index values and keep updating the multiplicity value of this record by incrementing by the multiplicity values of subsequent input records of this run. If the run ends, i.e., the next read input record ages to a different time or value discretization index value, then the aged output record may be stored, and a new one may be created for the new run.

As this process reads each input record only once and in ascending order, the created output records may be stored in the same memory location as already read input records. If such an in-place aging process is desired, a write pointer may be maintained, which points to the position at which the end of the last output record was written. After all input records of a segment for which in-place aging is desired are processed and corresponding output records are appended to the start of this segment, the segment may be truncated to the length indicated by this write pointer.

It is important that this data coarsening or aging process, which is enabled by the proposed unified storage format which combines a time discretization index value, a value discretization index value, and a multiplicity value, creates sequences of unified observation records that fulfill all prerequisites for a next data coarsening step. As input unified observation records used for the aging/data coarsening process are already in a specific order, specified by time and value discretization index values, and the aging/data coarsening process only maps either time or value discretization index values of input records to a coarse time or value discretization scheme, to create output records, also the so created aged/coarsened output unified observation records are created in the same specific order, which is suitable for a subsequent data coarsening or aging step.

The proposed storage scheme based on unified observation records optimizes and streamlines both data ingest and initial storage of observation data, and subsequent aging/data coarsening of ingested observation data to an extent, where ingest and initial storage of hundreds of thousands of observation data points, together with the concurrent aging of multiple storage segments, performed by a single ingest node, becomes possible. Reasons for these performance improvements include that the aging process only requires computationally inexpensive operations, like integer additions, bit-shift operations, sequential file scans, or discretization value lookups and updates, and that all formats of ingested observation data records are converted into a unified format.

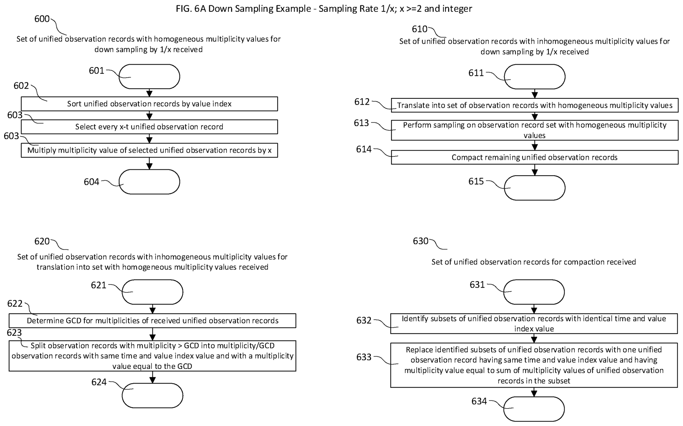

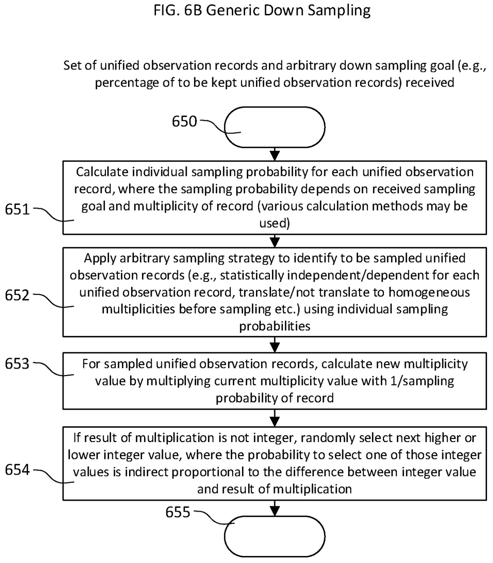

Coming now to FIGs. 6A and 6B, which describe variants of down sampling-based data reduction methods. FIG. 6A is directed at a fast down sampling approach that is restricted to a specific set of down sampling rates, and FIG. 6B describes a more generic down sampling approach which supports arbitrary sampling rates.

Flow chart 600 is directed to the selection of a representative sample of unified observation records out of a received set of records with homogeneous multiplicity values 128. The process starts with step 601, when a set of unified observation records is received for down sampling, together with sampling rate having the form of 1/x, where x is an integer value greater than or equal to 2. Following step 602 may then sort the unified observation records (either ascending or descending) by their value discretization index 127, and subsequent step 603 may then select every x-t record of the sorted list. E.g., for x=2, every second record is selected, for x=3 every third record and so on. The selected observation records 125 are kept, all others are discarded.

Following step 603 then multiplies the multiplicity values 128 of the retained observation records by x. The process then ends with step 604.

Flow chart 610 is directed to a down sampling process that also receives a sampling rate of 1/x, where x is integer and greater than or equal to 2, but in this case the multiplicity values of received observation records are inhomogeneous. The process starts with step 611, when a set of observation records with inhomogeneous multiplicity values, together with a sampling rate of the form 1/x is received. Following step 612 may translate the received set of observation records with inhomogeneous multiplicity values into an equivalent set of observation records with homogeneous multiplicity values. This process is shown in more detail in flow chart 620. The so created set of observation records is then sampled in step 613 as already described in flow chart 600, and subsequent step 614 afterwards compacts the retained observation records. This compaction step may detect multiple observation records having identical time 126 and value 127 discretization index values and replace them with a single observation record having the same time 126 and value 127 discretization index values and a multiplicity value set to the sum of the multiplicity values of the replaced observation records 125. Flow chart 630 provides more details of the compaction process. The process then ends with step 615.

Referring now to flow chart 620, which describes the translation of a set of unified observation record 125 with inhomogeneous multiplicity values into an equivalent set of unified observation record with homogeneous multiplicity values. The process starts with step 621, when a set of observation records with inhomogeneous multiplicity values is received. Following step 622 may determine the greatest common divisor (GCD) for the multiplicity values of the received observation records, and following step 623 may then identify observation records having a multiplicity that is greater than the GCS and split them into n different observation records, where n equals to multiplicity of the respective observation record divided by the GCD. Time 126 and value 127 discretization index values of the split observation records may be set to the same values as the identified observation record, and their multiplicity value 128 may be set to the GCD. The process then ends with step 624.

An alternative homogenization approach may replace unified observation records with a multiplicity value n that is greater than 1 by n observation records having multiplicity value 1, where the replacing observation records have the same time 126 and value 127 discretization values as the replaced observation records.

Referring now flow chart 630, which describes the compaction of a set of unified observation records 125, by identifying multiple observation records with identical time and value discretization values and replacing them by one observation record having the same time and value discretization values and a multiplicity value that equals the sum of the multiplicity values of replaced observation records.

The process starts with step 631, when a set of unified observation records is received for compaction. Step 632 may then identify subsets of observation records contained in the received set of unified observation records, where time 126 and value 127 discretization index values of each observation record in a given subset are identical. Following 633 then replaces each of the identified subsets by one unified observation record, where the unified observation record has the same time 126 and value 127 discretization index values as the observation records in the respective subset, and the multiplicity value 128 of the replacing observation record equals the sum of the multiplicity values of the observation records contained in the respective subset.

The process then ends with step 634.

Coming now to FIG. 6B, which describes a down sampling process that supports arbitrary sampling rates or sampling goals. Examples for sampling goals may specify a percentage of to be kept observation records, like e.g., 30% or 70% out of a set of received observation records.

This generic down sampling process starts with step 650, when a set of unified observation records 125, together with a down sampling goal is received. The down sampling goal may, as an example, specify a number of unified observation records that should be selected from the received set.

Following step 651 may calculate an individual sampling probability for each of the received unified observation records, where the sampling probability depends on the multiplicity of the individual records and the overall sampling goal. As an example, based on the above definition of the sampling goal as a number of sampled/surviving unified observation records, the sampling probability pₓ may be defined as min(1 multiplicityₓ* C), where x may be the index or other identifier of an individual unified observation record contained in the received set, multiplicityₓ may be the multiplicity value 128 of the observation record identified by x, and C may be a (yet unknown) constant. The sum of pₓ may then be set to the received desired number of sampled/surviving observation records and this equation may be resolved for the value of C using a known mathematical/numerical solving method. The value of C is then used in the above-mentioned equation pₓ = min(1, multiplicityₓ * C) to calculate the individual sampling probabilities for received observation records.

Following step 652 may then use the individual sampling probabilities calculated in step 651 to apply an arbitrary sampling strategy to select the desired number of surviving observation records from the received set. Step 652 may apply statistically dependent (i.e., calculate one random number and compare it with previously determined sampling probabilities to select sampled records) or independent (i.e., calculate a separate random number for each record and use it for the sampling decision for only this one record) approaches, and may also transform the set of received observation records into an equivalent set of observation records with homogeneous observation multiplicity values as described before.

The result of step 652 is a reduced set of unified observation records, according to the received sampling goal.

Subsequent step 653 may then adjust the multiplicity values 128 of sampled unified observation records by multiplying those multiplicity values by the reciprocal of the sampling probability pₓ (as calculated by step 651).

Following optional step 654 may then transform floating-point multiplicities that were created by step 653 into integer multiplicity values using a randomized rounding approach. Step 654 may, for a received floating-point multiplicity, replace it with the next smaller integer multiplicity value with a probability equal to the distance between received floating-point multiplicity and the next greater integer value, or replace it with the next greater integer multiplicity value using the inverse probability (i.e., probability equal to the distance between the received floating-point multiplicity and the next smaller integer) .

The process then ends with step 655.

Unified observation records 125 may in some embodiments be enriched with a "sampled" flag, which may be set if the creation of the unified observation record was created using sampled data. This flag may e.g., be set when unified observation records are created from pre-sampled observation records 310, or if a sampling step (e.g., as described in FIGs. 6A and 6B) was involved into the creation of the unified observation record itself, or for the creation of any other, previously created unified observation record that was directly or indirectly used for the creation of the unified observation record.

The proposed "sampled" flag may, for later calculated estimates of statistical parameters describing a distribution of observation values represented by one or a set of unified observation records, used to calculate error ranges or error guarantees for the calculated parameters. As an example, if it is known that the data that led to the creation of a unified observation record was never subject to a sampling process, then it can be guaranteed that all observation values represented by the unified observation record are from the value range defined by the value discretization index value of the observation record. If at least one sampling step was involved in the creation of the unified observation record, then this guarantee does not hold.

Referring now to FIG. 7, which conceptually depicts a storage record for histogram data, which uses a value adaptive bucket definition.

The proposed histogram record 700 may contain but is not limited to observation origin and type data 701, specifying a location where observations described by the histogram record were performed, and the type of those observations (i.e., CPU/memory usage of a process, response time of a service or error counts for a service), observation time data 702, specifying the time period in which observations defining the histogram were performed, and a point in time, or time period to which the histogram is assigned, a significant bit count value 703, which is used to define the buckets of the histogram, and which is also used to assign observation values to histogram buckets, and a bucket list 704, containing actual histogram data in form of multiple bucket entries 710.

A bucket entry 710, may contain but is not limited to a bucket range definition 711, which specifies the value range that a bucket covers, and an observation multiplicity 714, which stores the number of observation values that fall within the value range of the histogram bucket represented by the bucket entry.

A bucket range definition 711, may contain but is not limited to a significant bit sequence 712, which may contain a sequence of bits that was extracted from a value from the value range of the observations, preferably including the n most significant bits of the value, where n is defined by the significant bit count 703 of the enclosing histogram record, and a discarded bit count 713 specifying the number of bits of the value used to define the histogram bucket that are not contained in the significant bit sequence. All bits of the received observation value having a significancy that is lower than the significancy of the bits contained in the significant bit sequence are discarded.

As a simple example, the eight-bit value 01010111 should be transformed into a bucket range definition using a significant bit count definition of 3. This significant bit count definition selects the three most significant bits of the value starting with the most significant set bit. Therefore, the bit sequence 101 is selected as most significant bit sequence. The following 4 bits 0111 of the value are discarded, therefore the discarded bit count is set to 4.

A significant bit sequence 712 and a discarded bit count 713 uniquely identify a histogram bucket entry 710.

It should be noted that significant bit sequence and discarded bit count may be combined and encoded into one data element (i.e., storage area containing one integer or floating-point value of various size or accuracy).

It should further be noted that the proposed histogram bucket scheme may also be used as value discretization specification 136, by noting the type of value discretization, e.g., as value adaptive discretization, and a significant bit count value 703 as parameter value for the discretization. Value discretization index values 127 may then be stored in form of bucket range definitions 712, containing a significant bit sequence 712 and a discarded bit count 713.

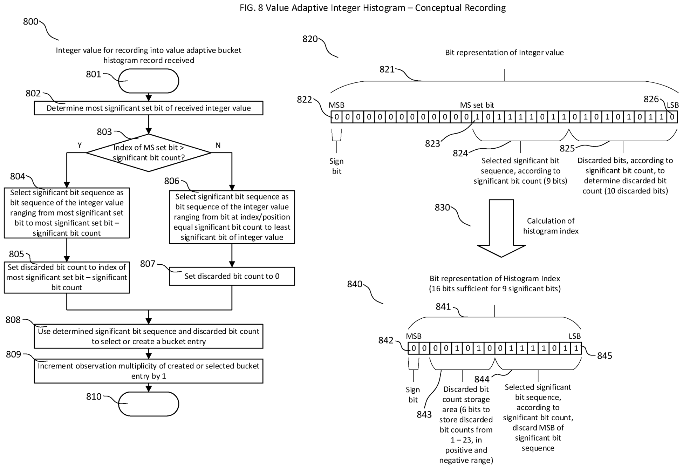

Coming now to FIG. 8, which illustrates the calculation of a bucket index for an incoming integer observation value using the proposed value adaptive histogram format, in form of a flow chart 800, and in form of an example 820 and 840, showing the bit layout of a received 32 bit integer observation value and of a 16 bit integer value containing the index of histogram bucket into which the observation value falls.

The procedure of calculating a histogram bucket index for a received integer value is shown in flow chart 800 and starts with step 801 when an integer observation value is received for the determination of its bucket index. Following step 802 may then determine the most significant set bit of the received observation value. Each bit of an integer value has another significance, where the lowest significant bit represents a numeric value of 1 if set, the bit with next higher significant represents a numeric value of 2 if set and so on. Step 802 identifies the position of the set bit of the received integer value that represents the highest numeric value.

Following decision step 803 then determines whether the index or position of the most significant set bit is greater than the significant bit count and continues with step 804 in this case. If the index of the most significant set bit is greater than the significant bit count, then a portion of the bits of the received observation value needs to be discarded to calculate the bucket index. Otherwise, the entire significant bit sequence of the receive observation value is used as bucket index.

Step 804 extracts a bit sequence from the received observation value that starts with the most significant set bit determined by step 802 and extends for significant bit count bits in direction to the least significant bit of the observation value.

Step 805 may then determine the number of discarded bits as the index number of the most significant bit minus the significant bit count.

In case the index of the most significant set bit is smaller than or equal to the significant bit count, decision step 803 continues the process with step 806, which selects the significant bit sequence of the received integer value as bit sequence starting with the bit at index/position equal to the significant bit count and extending to the least significant bit of the received observation value.

Following step 807 sets the discarded bit count to 0, as in this case no bits of the received observation value that describe the stored value are discarded.

Step 808, which is executed after step 805 or 807, uses the extracted significant bit sequence and the determined discarded bit count to select a matching bucket entry, or in case no matching bucket entry is available, to create a new one.

Following step 809 then increments the observation multiplicity 714 of the bucket entry selected or created by step 808 by 1. The process then ends with step 810.

Referring now to the bit representation of integer 32-bit value 388,438 820, for which a histogram index is created and stored in a 16-bit integer value 840, using a significant bit count of 9.

MSB/sign bit 822 of the received integer value is not set, indicating a positive stored value. The LSB 826 is also not set, indicating an even stored value. The index of the most significant bit 823 is 19 (when counting from LSB and starting to count with 1), therefore the significant bit sequence 824 starts at bit 19 (index of most significant set bit) and reaches until bit 11 (index of most significant set bit minus significant bit count). Bits 1 to 10 are discarded 825.

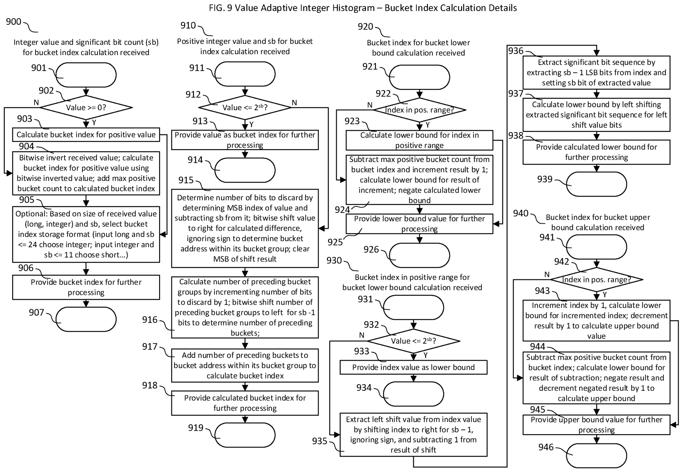

The received integer value is used as input for the calculation 830 of a histogram bucket index, which is generically described in flow chart 800, and described in more detail in FIG. 9, flow charts 900 and 910.

For the exemplary input value, the resulting histogram index is shown in element 840. For the bit-width (32 bit) of the received input value, and the selected significant bit count, 16 bits suffice for the storage of calculated histogram index values. Storage requirements for calculated histogram index values may be calculated using following formula: storage_size_histogram_index = significant bit count + ceiling(log2(bit width input value - significant bit count), where log2 refers to the binary logarithm and ceiling to a function that selects, for a floating point value, the next higher integer value. In this example, ceiling(log2(32 - 9)) yields 5, resulting in a required storage size of 14 bits. The smallest conventional data type that can hold such index values is a short integer/2-byte word, which contains 16 bits.

The significant bit sequence 824 is stored in the lower part/LSB part of the result representation, in the area 844 ranging from bit 1 to 8. As the extracted significant bit sequence always starts with a set bit (it starts per definition with the most significant set bit), it is implicitly given that the first bit of this sequence is always set. Therefore, it is not required to store this first bit of the sequence, because it contains no information. Consequently, only 8 bits are required to store a significant bit sequence of 9 bits.

The number of discarded bits 825 are binary encoded and stored in the area 843 following the area 844 that stores the significant bit sequence. In this example, 10 bits are discarded 825, therefore the binary encoded value of 10, which is 01010 is stored in the discarded bit count storage area.

The provided example stores the significant bit sequence aligned with the LSB of the data type used to represent the histogram index, and then with an offset of significant bit count, stores the corresponding discarded bit count. This enables the interpretation of the histogram index based only on the significant bit count that was used to create the histogram index, because the area storing the significant bit count can be determined using the convention that the significant bit count is stored starting from the LSB and the actual significant bit count, and the area storing the discarded bit count (if one is available) is adjacent to the area storing the significant bit sequence. Although the provided example uses the LSB of an integer as basis for the storage of the significant bit sequence, any other delimiter of the target datatype (e.g., MSB of an integer value, LSB or MSB of the mantissa bits of a floating-point value) can be used for the alignment of the storage area of the significant bit sequence, as long as the same convention is used for writing and reading the histogram index.

Coming now to FIG. 9, which provides flow charts of processes for creating histogram bucket index values out of received signed (capable to represent both positive and negative values) integer observation values, and to determine the upper and lower value bounds for a histogram bucket identified by a received histogram bucket index.

The processing of a received integer observation value to create a corresponding histogram bucket index is shown in flow charts 900 and 910, whereas the calculation of bucket upper and lower bounds for a received bucket index is shown in flow charts 920, 930 and 940.

The process of calculating a bucket index value for a received integer observation value starts with step 901, when a new observation value is received. Following decision step 902 determines whether the received value is greater than or equal to 0. In this case, the process continues with step 903, which calculates the bucket index value for the received positive observation value. The process of creating a bucket index value for a positive integer observation value is described in more detail in flow chart 910.

If otherwise the received observation value is negative, the process continues with step 904, which first bitwise inverts the received negative value, to create a corresponding positive value for the received value (for calculation performance reasons, negative integer values are represented using the one's or two's complement of corresponding positive numbers, which include bitwise inversion of positive integer value representations). The created bitwise inverted value is then used to create a bucket index value, as described in flow chart 910.

The resulting bucket index value is then increased by the maximal positive bucket count, to move bucket index values for negative observation values to a value range that does not overlap with the value range of bucket index values for positive observation values. As an example, the bucket index value for the maximum possible positive observation value may be calculated. This maximum positive bucket index value may be used as an offset value that is added to bucket index values created for negative values.

Optional step 905 may be executed after steps 903 or 904 and select storage a value size (byte, short integer, or integer) for the storage of the calculated bucket index value. The storage size requirements for the bucket index value may be calculated using the already discussed formula storage_size_histogram_index = significant bit count + ceiling(log2(bit width input value - significant bit count). If step 905 is omitted, the data type that was used to store the received observation value may be used to store the calculated bucket index value.

The calculated bucked index value may then be provided by step 906 for further processing, like the creation or update of a value adaptive bucket histogram record 700.

Afterwards, the process ends with step 907.

The calculation of a bucket index value for a positive integer observation value starts with step 911, when a positive integer value is received for the index calculation. Following decision step 912 determines whether the received observation value is smaller or equal to two to the power of the significant bucket count (2^{sb}). In case the observation value is smaller or equal to 2^{sb}, then step 913 is executed, which provides the observation value as bucket index value. The process then ends with step 914.

If otherwise the received positive observation value exceeds 2^{sb}, step 915 is executed, which may first determine the MSB index (index of most significant set bit) of the observation value and then subtract the significant bit count (sb) from this index to determine the number of bits to discard (btd). Then step 915 may shift the bits of the observation value to the right for btd bits. A bit-shift operation that does not include special handling of the sign bit 822 may be selected for this operation. The result represents a bucket index within a bucket group, where bucket groups are defined by the number of bits that were discarded for the calculation of a bucket index value. Afterwards, the MSB of the observation value, as it is after the shift operation may be cleared (as mentioned before, the significant bit sequence always starts with a set bit and therefore this first bit may be discarded, and its storage space may be used for other purposes).

Afterwards, step 916 may calculate a number of preceding bucket groups by incrementing the previously calculated number of bits to discard by 1.

This number of preceding bucket groups is then bitwise shifted to left for significant bit count - 1 bit to calculate the number of preceding buckets.

Following step 917 then combines number of preceding buckets and bucket address within bucket group to create the requested bucket index value. It should be noted that those operations guarantee that the binary value for preceding buckets and for bucket address within bucket group are located in different, not overlapping areas of the binary representation of an integer value. Step 917 may either use arithmetic addition or bitwise or operation to combine both values.

Afterwards, step 918 provides the created bucket index value for further processing, e.g., in processes similar to those described in flow chart 900.

The process then ends with step 919.

The calculation of the histogram bucket lower bound for a received bucket index is described in flow chart 920 and starts with the receipt of a bucket index for which the lower bound value should be calculated in step 921. Following step 922 determines whether the received bucket index is in positive range, i.e., if it is smaller than the maximum positive bucket count determined in step 904 of flow chart 900. In case the bucket index is in the positive range, the process continues with step 923, which calculates the requested lower bucket index. This calculation is described in more detail in flow chart 930. Otherwise, step 924 is executed, which subtracts the maximum positive bucket count from the received bucket index and then increments the result of the subtraction by 1. The result of the value increment is then used to calculate a bucket lower bound for a bucket index in positive range, as described in flow chart 930. The result of this lower bound calculation is then negated (i.e., multiplied by -1) to determine the lower bound for the histogram bucket in the negative value range.

Step 925 is executed after steps 923 or 924, which provides the calculated lower bound value for further processing, like the determination of an absolute or relative error of observations that fell into the histogram bucket that is addressed by the received bucket index.

The process then ends with step 926.

The process of calculating the lower bound of a histogram bucket from positive value range is shown in flow chart 930 and starts with receipt of a bucket index form positive value range with step 930.

Following decision step determines whether the received bucket index is smaller than or equal to 2^{sb}. Bucket index values not exceeding 2^{sb} are created using the original observation value. In these cases, the bucket lower bound value (and also the bucket upper bound value) are identical with the bucket index value. Therefore, step 933 is executed in this case, which provides the bucket index value as lower bound value of the bucket identified by the index value.

The process then ends with step 934.

If otherwise the bucket index value exceeds 2^{sb}, the process continues with step 935, which extracts a left shift value from the received bucket index value by shifting the index value to the right for sb - 1 bits, using a bit-shift operation that ignores the sign of the integer value on which the shift operation is applied. The result of the shift operation is the number of discarded bits, which was calculated and encoded into the index value by steps 915 and 916 of process 910. The result of the bit-shift operation is then decremented by 1.

Following step 936 then extracts the bit sequence from the bit with index sb -1 to the LSB from the index value. The result of this extraction equals the address within bucket group calculated by step 915 of process 910. Various masking or other extraction methods may be applied that select and isolate a specific bit sequence from a large, enclosing bit sequence, like an integer data type. The result of this extraction may then be prefixed with one set bit, as the first, always set bit of the address within bucket group value contains no information and is therefore not stored in the bucket index value.

Afterwards, step 937 is executed, which calculates the lower bound value for the addressed bucket by shifting the bit sequence created by step 936 to the left for left shift value (the value calculated by step 935) bit positions.

Following step 938 then provides the calculated lower bound value for further processing.

The process then ends with step 939.

The calculation of bucket upper bounds for received bucket index values is described in flow chart 940 and starts with the receipt of a bucket index for which an upper bound should be calculated in step 941. Following decision step 943 determines whether the received index value is in the positive range (i.e., smaller or equal to the maximal positive bucket count), and in this case continues the process with step 943, which increments the received index by 1, calculates the lower bound for the incremented index value (e.g., using the process described in flow chart 910) to get the upper bound for the bucket identified by the incremented index. As upper and lower bounds of adjacent buckets are also adjacent, the upper bound for the bucket identified by the received index can be calculated by subtracting 1 from the lower bound of the bucket identified by the incremented index.

If the received bucket index is not in the positive range, step 944 is executed, which subtracts the maximal positive bucket count from the received index value and calculates a lower bound value for the result of the subtraction (also using process 910). The calculated lower bound is then negated and the negated result is then decremented by 1 to calculate the upper bound for the bucket in the negative value range.

Step 945 is executed after step 943 or 944 and provides the bucket upper bound value calculated by one of those steps for further processing.

The process then ends with step 946.

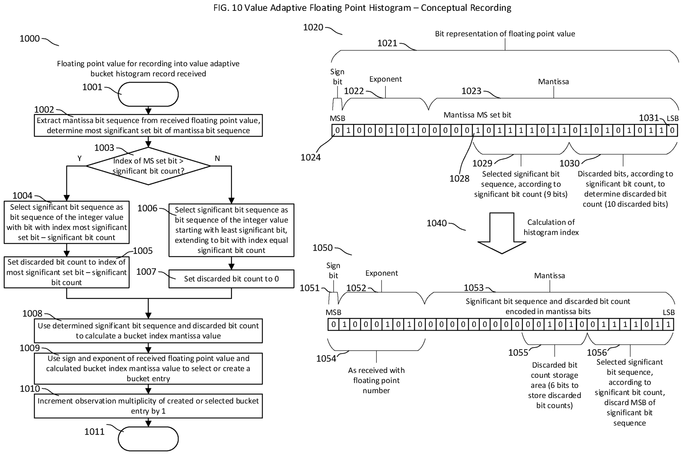

Coming now to FIG. 10, which illustrates how the concept of value adaptive histogram buckets may be applied to floating-point observation values. Floating-point values are binary represented by a sign bit, a set of bits representing the mantissa of the floating-point value, and a set of bits representing the exponent value of the floating-point value. The proposed value adaptive histogram bucket concepts may be applied to the mantissa part of floating-point values.

Flow chart 1000 shows the procedure of updating a value adaptive histogram record directed to the storage of floating-point values, including the calculation of a floating-point histogram index value for a received floating-point observation value, whereas the bit layout of a received floating-point observation value and a corresponding floating-point histogram bucket index value are shown in elements 1020 and 1050.

The calculation of a floating-point bucket index value starts with step 1001, when a floating-point observation value is received for index value calculation. Following step 1002 extracts the mantissa bit sequence from the received floating-point value and determines the most significant set bit of the mantissa bit sequence.

Subsequent decisions step 1003 determines whether the index of the most significant mantissa bit is greater than the significant bit count. In this case, step 1004 is executed, which selects a significant bit sequence from the extracted mantissa bits, where the significant bit sequence starts with the most significant set bit and extends for significant bit count bits.

Following step 1005 then determines a discarded bit count as the index position of the most significant set bit minus the significant bit count.

If the index of the most significant mantissa bit is not greater than the significant bit count, step 1006 is executed, which select the bit sequence starting with the most significant set bit of the extracted mantissa bits to the LSB of the mantissa bits as significant bit count. Following step 1007 then sets the discarded bit count to 0.

Step 1008 is executed after step 1005 or 1007 and uses the determined significant bit sequence and the discarded bit count to calculate a bucket index mantissa value. Processes already described for the calculation of bucket index values for integer observation values in FIGs. 8 and 9 may be used for this calculation.

Following step 1009 uses sign bit and exponent bits of the received floating-point observation value and the bucket index mantissa value calculated by step 1008 to create a floating-point bucket index value. The created floating-point bucket index value is then used to select a matching bucket entry 710, or to create a new one if no bucket entry with a bucket range definition matching the calculated floating-point bucket index value is available in the histogram record 700 that should be updated.

Next, step 1010 increments the observation multiplicity 714 of the bucket entry 710 selected or created in step 1009 by 1.

The process then ends with step 1011.

The binary representation of the floating-point value 2142.83349609375 in 32-bit floating-point format is shown in graphical representation 1020. The sign bit 1024 is not set, indicating a positive number, the exponent 1022 has the decimal value 138, which is interpreted as 2¹¹ and the mantissa 1023 has the decimal value 388438 which is interpreted as the floating-point value 1 + 0.04630541801452637 according to the IEEE 754 floating point standard.

The histogram index calculation process 1040 selects the mantissa bit sequence 1023 of the received floating-point value 1021 and performs a bucket index calculation by selecting a significant bit sequence 1029 starting with the most significant set bit 1028 of the mantissa bit sequence and determining a number of discarded bits 1030 by using a significant bit count as already described for integer data types in FIG. 8.

Sign bit 1024 and exponent bit sequence values 1022 of the received floating-point value are copied to sign bit 1051 and exponent 1052 of the created floating-point histogram index value 1050. The mantissa bits 1053 of the created index value are used to store the encoded number of discarded bits 1055, followed by the extracted significant bit sequence 1056.

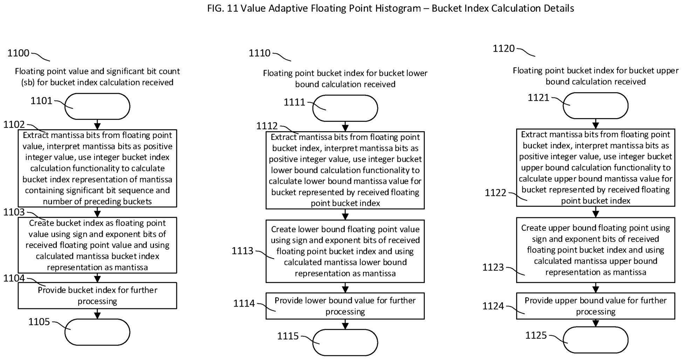

Referring now to FIG. 11, which provides flow charts of processes to calculate a floating-point bucket index value from a received floating-point observation value, and to determine upper bound and lower bound of received floating-point bucket index. Basically, the proposed processes extract the mantissa bit sequence from received floating-point values and apply the integer data type directed processes to the mantissa bit sequence described in FIG. 8 to calculate bucket index, upper or lower bound values from the mantissa bit sequence. The calculated mantissa values are then combined with sign and exponent data sequences of receive floating-point values to calculate the desired floating-point format results.

The calculation of a floating-point bucket index value for a received floating-point observation value is shown in flow chart 1100 and starts with step 1101 when a floating-point observation value, together with a significant bit count (sb) is received. Following step 1102 extracts the mantissa bit sequence from the received floating-point observation value. Various masking and bit-shifting operations may be used to separate the mantissa bit sequence. The mantissa bit sequence is then interpreted as positive integer value, and the process to create a bucket index value for a positive integer value, as described in flow chart 910 is applied on the mantissa bit sequence to create corresponding integer bucket index value.

Afterwards, step 1103 creates a floating-point bucket index value by using sign bit and exponent bit sequence received with the floating-point observation value as sign bit and exponent bit sequence of the floating-point bucket index value and using the integer bucket index value created by step 1102 from the mantissa bit sequence of the received floating-point observation value as mantissa bit sequence of the floating-point bucket index value.

Step 1104 then provides the created floating-point bucket index value for further processing, and the process afterwards ends with step 1105.

The process of calculating the lower bound value for a received floating-point bucket index is shown in flow chart 1110 and starts with step 1111 when a floating-point bucket index value for lower bound value calculation is received. Following step 1112 extracts the mantissa bit sequence from the received bucket index value, interprets the mantissa bit sequence value as positive integer and uses a bucket lower bound calculation process as shown in flow chart 930 to calculate a bucket lower bound value for the extracted mantissa bit sequence. Step 1113 then creates a floating point lower bound value for the received index value by using sign and exponent from the received index value and combing them with the lower bound value calculated for the extracted mantissa bit sequence. Subsequent step 1114 then provides the calculated floating-point bucket lower bound value for further processing, and the process afterwards ends with step 1115.

The calculation of the upper bound value for a received floating-point bucket index value is shown in flow chart 1120 and starts with the receipt of a floating-point bucket index value for which an upper bound value should be calculated. Following step 1122 extracts the mantissa bit sequence form the received bucket index value and uses the mantissa bit sequence to calculate a corresponding integer upper bound value by applying functionality to calculate an upper bound value for integer bucket index value (i.e., the process described in flow cart 940) to the extracted mantissa bit sequence.

Step 1123 then calculates a floating-point upper bound value by combining sign and exponent of the received floating-point bucket index with the integer upper bound value calculated for the extracted mantissa bit sequence. Following step 1124 provides the calculated floating-point upper bound value for further processing and the process then ends with step 1125.

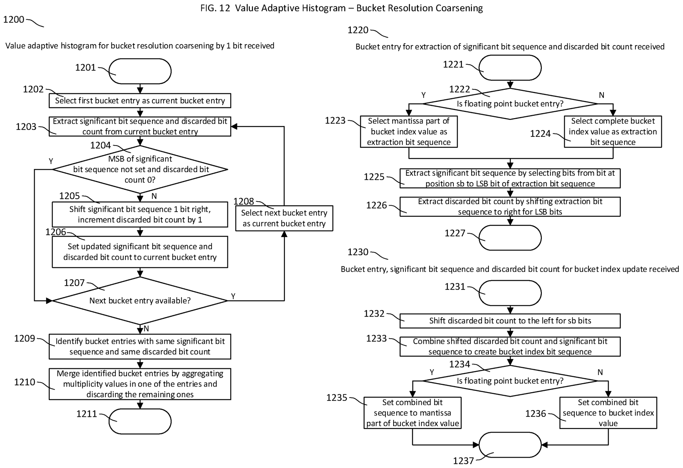

Coming now to FIG. 12, which provides flow charts of processes used for histogram data resolution coarsening. The resolution coarsening is performed by applying a coarser histogram bucket definition on an already recorded histogram record. For value adaptive histogram records, as described before, the elementary resolution coarsening operation is to discard the LSB of the significant bit sequence 712 of the bucket range definitions of bucket entries of a histogram record, and then increase the discarded bit count value 713 by 1. This typically leads to multiple bucket entries with identical bucket range definitions. Those bucket entries 710 with identical bucket range definitions 711 may be replaced with one bucket entry with the same bucket range definition 711, but with an observation multiplicity value 714 equal to the sum of the observation multiplicity values 714 of the replaced bucket entries 710.

The process of histogram bucket resolution coarsening by 1 bit is shown in flow chart 1200 and starts with step 1201 when an already recorded histogram record 700 is received for 1-bit resolution coarsening.

Following step 1202 select the first bucket entry 710 of the received histogram, and subsequent step 1203 may then extract significant bit sequence 712 and discarded bit count 713 from the bucket entry. Step 1202 may consider whether the bucket entry describes an integer or a floating-point value range and adapt the extraction process accordingly. Step 713 may apply the process described in flow chart 1220 for the extraction.

Following decision step 1204 then determines whether the most significant bit (msb) of the extracted significant bit is not set, and if the discarded bit count is 0. If both conditions are true, then the bucket index value is not affected by the bucket resolution coarsening, and the process skips to decision step 1207, which checks whether a next bucket entry is available.

If otherwise either the msb of the significant bit sequence is set, or the discarded bit count is greater than 1, step 1205 is executed, which shifts the significant bit count to the right by 1 bit, which discards the lease significant bit (Isb) of the significant bit sequence and decreases the length of this bit sequence by 1 bit. In addition, step 1206 increments the discarded bit count by 1, because now one additional bit of the original observation value that was used to create this histogram bucket index value is discarded.

Following step 1206 then sets the updated significant bit sequence and discarded bit count to the current bucket entry. Step 1206 may also consider whether the current bucket entry represents an integer or a floating-point value range, and it may use the process described in flow chart 1230 for this update.

Afterwards, the process continues with decision step 1207, which determines whether a next bucket entry 710 is available in the bucket list 704 of the processed histogram record 700. If there is another bucket entry available, the process continues with step 1208, which selects the next bucket entry as current bucket entry and then continues with step 1203.

If otherwise no next bucket entry is available, the process continues with step 1209, to identify sets of bucket entries containing bucket entries which have the same significant bit sequence 712 and the same discarded bit count 713 after the bucket resolution coarsening.

Following step 1210 then replaces the bucket entries of each of the identified sets by one representative bucket entry that has the same significant bit sequence 712 and discarded bit count 713 as the replaced bucket entries and that has an observation multiplicity value 714 equal to the sum of the observation multiplicity values of the replaced bucket entries.

The process then ends with step 1211.

The process of extracting significant bit sequence and discarded bit count from a bucket entry is shown in flow chart 1220 and starts with step 1221, when a bucket entry is received for the extraction. Following decision step 1222 determines whether the received bucket contains an integer or a floating-point bucket index value. Step 1221 may e.g., analyze the data type containing the bucket index for this decision. In case a floating-point bucket index is detected, step 1223 is executed, which selects the mantissa bit sequence as bit sequence on which the extraction should be applied. If otherwise an integer bucket index is detected, step 1224 is executed, which selects the complete bucket index as bit sequence on which the extraction should be applied.

Step 1225 is executed after step 1223 or 1224 and extracts the significant bit sequence of the previously selected extraction bit sequence, e.g., by selecting the bit sequence starting with the bit at the position index equal to the significant bit count that was used to create the bucket index and extending to the least significant bit (LSB) of the selected extraction bit sequence.

Following step 1226 may then determine the discarded bit count by shifting the extraction bit sequence to the right for significant bit count bits. This discards the stored significant bit sequence, and the result of the bit-shift operation only contains the discarded bit count, which is stored before the significant bit sequence. Extracted significant bit sequence and discarded bit count are provided for further processing (e.g., by the process described by flow chart 1200), and the process afterwards ends with step 1227.

The process of updating a bucket entry with a new significant bit sequence and a new discarded bit count is shown in flow chart 1230 and starts with step 1231, when a bucket entry for update and a new significant bit sequence and discarded bit count which should be used for the update, are received.

Following step 1232 may shift the bit sequence containing the discarded bit count to the left for significant bit count (sb) bit digits, and following step 1233 may then combine the result of the bit-shift operation with the received significant bit sequence. Step 1233 may either use an arithmetic addition function, or a bit wise or function for this combination.

Following decision step 1234 may then determine whether the received bucket entry specifies a floating-point or an integer value range. In case of a floating-point bucket entry, step 1235 is executed, which sets the combined bit sequence created by step 1233 to the mantissa part of the bucket index 711 of the entry 701. Otherwise step 1236 is executed, which completely replaces the index of the received bucket entry with the combined bit sequence.

The process then ends with step 1237 after step 1235 or 1236.

It should be noted that the histogram bucket definitions described above in text related to FIGs. 7 to 11 may also be used as value discretization specification 136, and calculated value discretization index values 127 may be stored in form of integer or floating-point bucket index values. In addition, the value resolution coarsening process described in flow chart 520 of FIG. 5 may use, for value discretization index values stored as integer or floating-point index values, the bucket resolution coarsening processes described in FIG. 12.

It is also noteworthy that the proposed histogram definition enables fast and efficient calculation of histogram bucket indices for received values that should be added to the histogram, of bucket upper and lower bound values for histogram bucket and of calculations to coarsen the value resolution of an already recorded histogram. Those calculations only require fast and efficient operations like bit-shift, bitwise logical operations, and identification of a most significant set bit for a received value. This highly efficient histogram update and evaluation functionality is combined with highly dense and compact storage layout, in which the storage size required for the definition of a histogram bucket is at most equal, and in most cases even smaller than the storage size of received histogram update values. This combination of features greatly improves the efficiency in which computing resources are used for creation, storage, manipulation, and interpretation of histogram data, for both integer and floating-point observation data.

The techniques described herein may be implemented by one or more computer programs executed by one or more processors. The computer programs include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

Some portions of the above description present the techniques described herein in terms of algorithms and symbolic representations of operations on information. These algorithmic descriptions and representations are the means used by those skilled in the data processing arts to most effectively convey the substance of their work to others skilled in the art. These operations, while described functionally or logically, are understood to be implemented by computer programs. Furthermore, it has also proven convenient at times to refer to these arrangements of operations as modules or by functional names, without loss of generality.

Unless specifically stated otherwise as apparent from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the described techniques include process steps and instructions described herein in the form of an algorithm. It should be noted that the described process steps and instructions could be embodied in software, firmware or hardware, and when embodied in software, could be downloaded to reside on and be operated from different platforms used by real time network operating systems.

The present disclosure also relates to an apparatus for performing the operations herein. This apparatus may be specially constructed for the required purposes, or it may comprise a computer selectively activated or reconfigured by a computer program stored on a computer readable medium that can be accessed by the computer. Such a computer program may be stored in a tangible computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The algorithms and operations presented herein are not inherently related to any particular computer or other apparatus. Various systems may also be used with programs in accordance with the teachings herein, or it may prove convenient to construct more specialized apparatuses to perform the required method steps. The required structure for a variety of these systems will be apparent to those of skill in the art, along with equivalent variations. In addition, the present disclosure is not described with reference to any particular programming language. It is appreciated that a variety of programming languages may be used to implement the teachings of the present disclosure as described herein.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A computer-implemented method for storing performance monitoring data in a distributed computing environment, comprising:
- defining a storage segment for storing observation data, each storage segment includes a time discretization specification, a value discretization specification, and one or more data records, where the time discretization specification specifies size of a time interval, the value discretization specification specifies size a value range, and each data record includes a time index value specifying a particular time interval in which a given observation was made and a value index value specifying a particular range in which value for the given observation lies;
- storing the storage segment in a non-transitory data store;
- capturing, by an agent, observation data, where the agent is instrumented in an application and the performance metric pertains to execution of the application;
- receiving, by a computer processor, the observation data in form of one or more observation records, where each observation record includes a time at which an observation was made and a value for a performance metric;
- retrieving, by the computer processor, the time discretization specification and value discretization specification from the storage segment in the data store;
- for each observation record in the observation data, mapping, by the computer processor, the time at which an observation was made to a time index value using the time discretization specification;
- for each observation record in the observation data, mapping, by the computer processor, the value for a performance metric to a value index value using a mapping function and the value discretization specification;
- for each observation record in the observation data, updating, by the computer processor, a data record in the storage segment using the corresponding time index value and the corresponding value index value.

2. The method of claim 1 further comprises storing a plurality of storage segments in the non-transitory data store and, for each observation record in the observation data, retrieving a particular storage segment from the plurality of storage segments based on the time at which an observation was made, where the time discretization specification for each of the storage segments further specifies a start time and a time duration for the storage segment.

3. The method of claim 2, wherein each storage segments further includes one or more data segments, where each of the one or more data segments store data for a different performance metric.

4. The method of claim 3 further comprises, for each observation record in the observation data, determining a data type for the performance metric contained therein and selecting a particular data segment from the one or more data segments based on the data type for a given observation record.

5. The method of any one of the preceding claims, wherein updating a data record in the storage segment further comprises determining whether a data record having the corresponding time index value and the corresponding value index value exists in the storage segment; modifying the data record in response to a determination that the data record exists; and creating the data record in response to a determination that the data record does not exist in the storage segment.

6. The method of any one of the preceding claims, wherein each data record further includes a multiplicity field specifying the number of observations and updating a data record in the storage segment includes incrementing value of the multiplicity field.

7. The method of any one of the preceding claims further comprises increasing size of the time interval specified in the time discretization specification and performing data reduction operation on the one or more data records stored in the data store in accordance with the increased size of the time interval.

8. The method of claim 7, wherein performing the data reduction operation includes updating the time index values for each of the one or more data records according to the increases size of the time interval and merging data records having same time index values and same value index values together.

9. The method of claim 8, wherein each data record further includes a multiplicity field specifying the number of observations and merging data records having same time index value and same value index values includes summing values multiplicity fields of merged data records.

10. The method of any one of the preceding claims further comprises increasing size of the value range specified in the value discretization specification and performing data reduction operation on the one or more data records stored in the data store in accordance with the increased size of the value range.

11. The method of claim 10, wherein performing the data reduction operation includes updating value index values for each of the one or more data records according to the increased size of the value range and merging data records having same time index values and same value index values together.

12. The method of claim 6 further comprises performing a data reduction operation by sorting the one or more data records by the index value to form a list of data records, selecting every x record from the list of data records to form a reduced set of data records, and updating values of multiplicity field in each data record in the reduced set of data records according the x.

13. The method of claim 6 further comprises performing a data reduction operation by sorting the one or more data records by the index value to form a list of data records, sampling data records in the list of data records to form a reduced set of data records according to a sampling rate, and updating values of multiplicity fields in each data record in the reduced set of data records according the sampling rate.

14. The method of any one of the preceding claims, wherein the value discretization specification is defined as a histogram, each histogram record in the histogram includes a significant bit count and one or more bucket entries, where the significant bit count specifies number of significant bits being stored, and each bucket entry stores a sequence of significant bits and number of discarded bits.

15. A non-transitory computer-readable medium having computer-executable instructions that, upon execution of the instructions by a processor of a computer, cause the computer to
- define a storage segment for storing observation data, each storage segment includes a time discretization specification, a value discretization specification, and one or more data records, where the time discretization specification specifies size of a time interval, the value discretization specification specifies size a value range, and each data record includes a time index value specifying a particular time interval in which a given observation was made and a value index value specifying a particular range in which value for the given observation lies;
- store the storage segment in a non-transitory data store;
- receive observation data in form of one or more observation records, where each observation record includes a time at which an observation was made and a value for a performance metric;
- retrieve the time discretization specification and value discretization specification from the storage segment in the data store;
- for each observation record in the observation data, map the time at which an observation was made to a time index value using the time discretization specification;
- for each observation record in the observation data, map the value for a performance metric to a value index value using a mapping function and the value discretization specification; and
- for each observation record in the observation data, update a data record in the storage segment using the corresponding time index value and the corresponding value index value.
